# EUROPEAN PATENT APPLICATION

(11) **EP 3 255 450 A1**
(43) Date of publication of application: **13.12.2017**
(21) Application number: 16173657.4
(22) Date of filing: 09.06.2016
(51) Int. Cl.: G01S 5/02

(54) **A POSITIONING ARRANGEMENT**

(71) Applicant: Nokia Technologies Oy, 02610 Espoo (FI)
(72) Inventor: ERONEN, Antti, 33820 Tampere (FI); LEHTINIEMI, Arto, 33880 Lempäälä (FI); LEPPÄNEN, Jussi, 33580 Tampere (FI); KOLMONEN, Veli-Matti, 02920 Espoo (FI)
(74) Representative: Nokia EPO representatives

(57) **Abstract**

The invention relates to a method and a system for positioning objects, the method comprising detecting, by a central unit, signals from a plurality of receiver/transmitter units at least partly surrounding an area around the central unit; detecting, by the central unit, an absence of at least one signal from at least one of the plurality of receiver/transmitter units at least partly surrounding an area around the central unit; and determining a position of at least one object between the central unit and the at least one of the plurality of receiver/transmitter units based on the detected absence of the at least one signal.

## Description

### Technical field

This invention relates to the field of positioning an object of interest within a predefined area.

### Background

Various technologies have been developed during recent decades for determining a position of an object of interest. While many known technologies, such as satellite-based positioning technologies, operate well in outdoor environment, they may be poorly applicable to indoor environment or to applications requiring determination of relative positions of a plurality of objects to each other. The known technologies also may typically require that the object of interest is provided with a transmitter for sending a trackable signal.

Improved audio technologies enable automatic capture and creation of audio scenes with moving sources. One of the techniques is spatial audio mixing positioning technology wherein a sound source is positioned using positioning tags that can be worn by the sound source, e.g. a musician. It may be beneficial to be able to localize an object in the sound scene without needing to wear a tag.

### Summary

Now there has been invented an improved method and technical equipment implementing the method, by which the above problems are alleviated. Various aspects of the invention include a method, an apparatus, a computer readable medium comprising a computer program stored therein, and a system which are characterized by what is stated in the independent claims. Various embodiments of the invention are disclosed in the dependent claims.

According to a first aspect, a method comprises detecting, by a central unit, signals from a plurality of receiver/transmitter units at least partly surrounding an area around the central unit; detecting, by the central unit, an absence of at least one signal from at least one of the plurality of receiver/transmitter units at least partly surrounding an area around the central unit; and determining a position of at least one object between the central unit and the at least one of the plurality of receiver/transmitter units based on the detected absence of the at least one signal.

According to an embodiment, the method further comprises prior to detecting, transmitting, by the central unit, at least one evoking signal towards at least one of the plurality of receiver/transmitter units.

According to an embodiment, the method further comprises detecting, by the central unit, that an acknowledgement signal is not received from at least one of the plurality of receiver/transmitter at a predetermined time in response to transmitting of the at least one evoking signal.

According to an embodiment, the method further comprises determining, by the central unit, a region based by at least one of the plurality of receiver/transmitter units from which the central unit has not received the at least one signal; and determining a position of the at least one object based on the determined region.

According to an embodiment, determining the region based by at least one of the plurality of receiver/transmitter units comprises determining a number of the receiver/transmitter units from which the central unit has not received the at least one signal.

According to an embodiment, determining the position of the at least one object based on the determined region comprises determining one or more of the group of a horizontal distance of the at least one object from the central unit; and a direction of the at least one object from the central unit.

According to an embodiment, the method further comprises receiving at least one audio signal from the at least one object; and providing the at least one audio signal and the determined position of the at least one object corresponding to the at least one audio signal to a processing unit for spatial audio mixing.

According to a second aspect, an apparatus comprises at least one processor, memory including computer program code, the memory and the computer program code configured to, with the at least one processor, cause the apparatus to perform the method of any of the embodiments above.

A third aspect includes a computer program product embodied on a non-transitory computer readable medium, comprising computer program code configured to, when executed on at least one processor, cause an apparatus to perform the method according to any of the embodiments above.

According to a fourth aspect, a method comprises transmitting, by at least one of the plurality of receiver/transmitter units at least partly surrounding an area around a central unit, at least one signal to the central unit for determining position of at least one object between the central unit and at least one of the plurality of receiver/transmitter units.

According to an embodiment, the method further comprises, prior to transmitting, receiving, by at least one of the plurality of receiver/transmitter units at least partly surrounding an area around the central unit, at least one evoking signal from the central unit; and wherein the at least one signal is an acknowledgement signal in response to transmitting of the at least one evoking signal.

According to an embodiment, the plurality of receiver/transmitter units are arranged in a sticker tape.

According to a fifth aspect an apparatus comprises at least one processor, memory including computer program code, the memory and the computer program code configured to, with the at least one processor, cause the apparatus to perform the method of any of the embodiments above.

A sixth aspect includes a computer program product embodied on a non-transitory computer readable medium, comprising computer program code configured to, when executed on at least one processor, cause an apparatus to perform the method of any of the embodiments above.

According to a seventh aspect, a system comprises a plurality of receiver/transmitter units; at least one central unit; the plurality of receiver/transmitter units being operatively connected to at least one central unit; and the plurality of receiver/transmitter units at least partly surrounding an area around the at least one central unit, the system being arranged to perform the method of any of the embodiments above.

### Brief description of the drawings

In the following, various embodiments of the invention will be described in more detail with reference to the appended drawings, in which
Fig. 1a and 1b
   show an example of a system and devices for positioning an object.

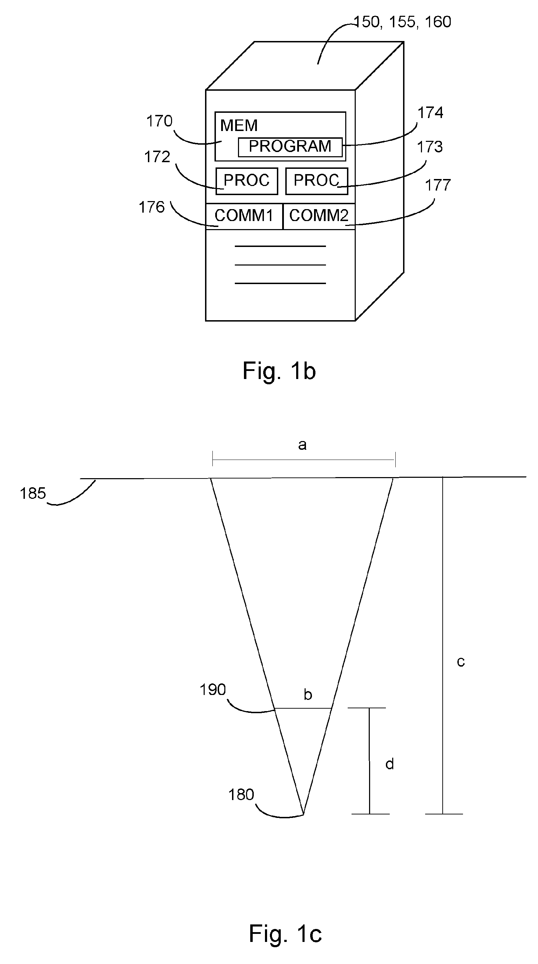

Fig. 1c shows a diagram of distances and measures of an example setup.
Fig. 2a and 2b
   show an example of a multi-camera system and a perspective view of a multi-camera system, respectively.

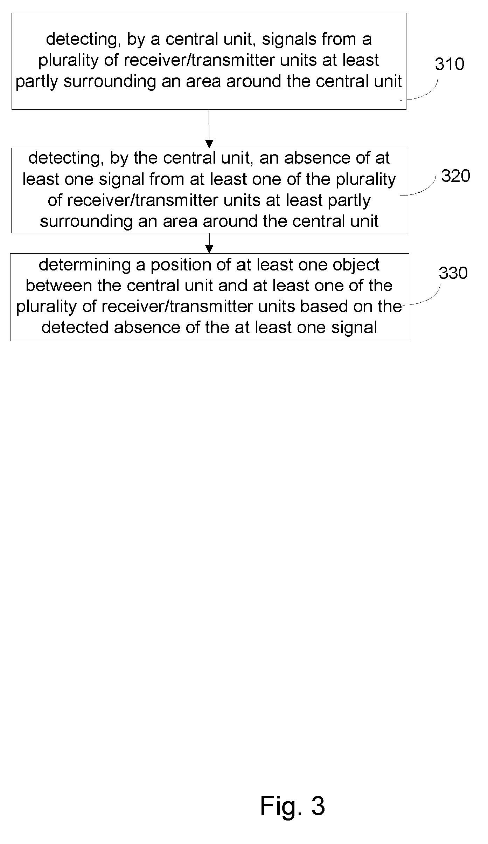

Fig. 3 shows a flowchart of an example of a positioning method.

### Detailed description

In the following, several embodiments of the invention will be described in the context of spatial audio mixing positioning technology. It is to be noted, however, that the invention is not limited to such implementations. In fact, different embodiments have applications in any environment where positioning of an object is required.

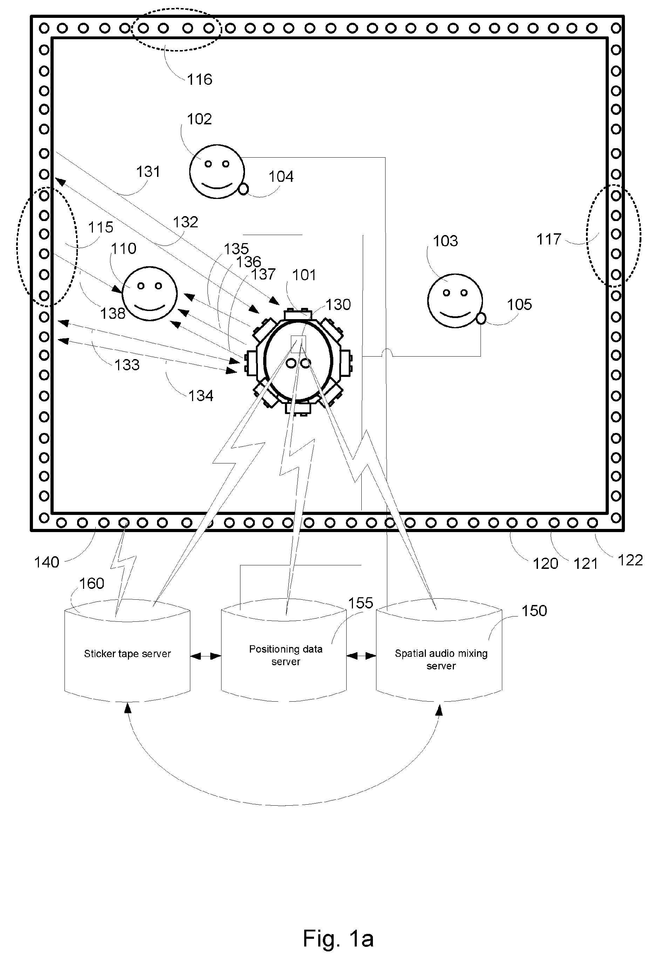

Figures 1 a and 1 b depict an example of a system and devices for positioning an object, e.g. a sound source on a music stage. The system may comprise a central unit 130. The central unit 130 may be a separate device or it may be part of e.g. a virtual reality camera accessory 101 a.k.a. a multi-camera system positioned e.g. on the music stage.

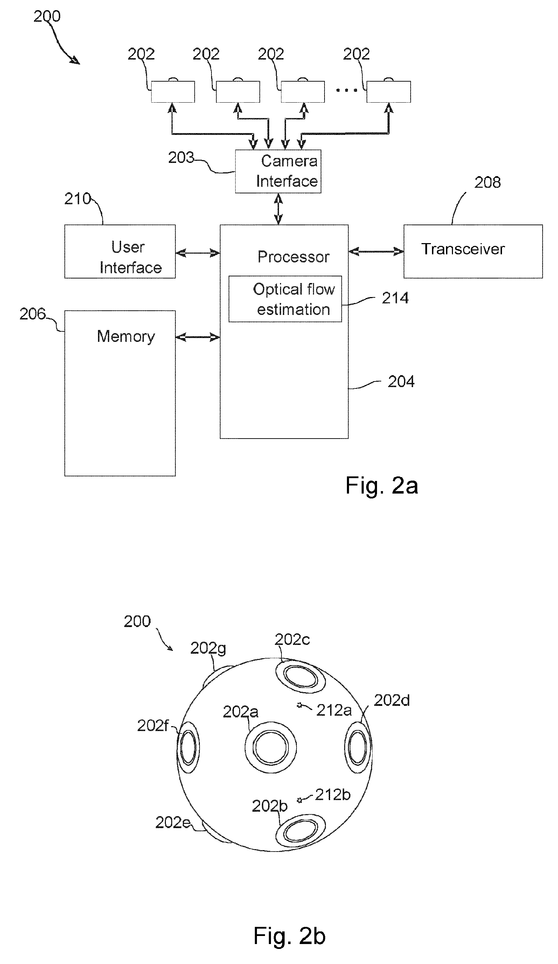

Figure 2a illustrates an example of a multi-camera system 200, which may be able to capture and produce 360 degree stereo panorama video. The multi-camera system 200 comprises two or more camera units 202 that may be in connection with a camera interface 203. In the example of Figure 1a, the number of camera units is eight, but may also be less than eight or more than eight. Each camera unit 202 is located at a different location in the multi-camera system, and may have a different orientation with respect to other camera units 202, so that they may capture a part of the 360 degree scene from different viewpoints substantially simultaneously. A pair of camera units 202 of the multi-camera system 200 may correspond with left and right eye viewpoints at a time. As an example, the camera units 202 may have an omnidirectional constellation, so that it has a 360° viewing angle horizontally and vertically in a 3D-space. In other words, such multi-camera system 200 may be able to see each direction of a scene so that each spot of the scene around the multi-camera system 200 can be viewed by at least one camera unit 202 or a pair of camera units 202.

The multi-camera system 200 of Figure 2a may also comprise a processor 204 for controlling operations of the multi-camera system 200. There may also be a memory 206 for storing data and computer code to be executed by the processor 204, and a transceiver 208 (communication interface) for communicating with, for example, a communication network and/or other devices in a wireless and/or wired manner. The multi-camera system 200 may further comprise a user interface (UI) 210 for displaying information to the user, for generating audio signals, and/or for receiving user inputs. However, the multi-camera system 200 need not comprise each feature mentioned above, or may comprise other features as well. For example, there may be electric and/or mechanical elements for adjusting and/or controlling optics of the camera units 202.

Figure 2a also illustrates some operational elements which may be implemented, for example, as a computer code which can be executed in the processor 204, in hardware, or both to perform a desired function. An optical flow estimation 214 may perform optical flow estimation for pair of images of different camera units 202. Transform vectors or other information indicative of an amount interpolation/extrapolation to be applied to different parts of a viewport may have been stored into the memory 206 or they may be calculated e.g. as a function of the location of a pixel in question. It should be noted that there may also be other operational elements in the multi-camera system 200 than those depicted in Figure 2a.

Figure 2b shows a perspective view of the multi-camera system 200, in accordance with an embodiment. In Figure 2b seven camera units 202a-202g can be seen, but the multi-camera system 200 may comprise even more camera units which are not visible from this perspective view. Figure 2b also shows two microphones 212a, 212b, but the apparatus may also comprise one microphone or more than two microphones. A plurality of the microphones may be arranged in a form of a microphone array. The microphone array may capture a spatial audio signal, which, when rendered to a user, may enable the user to experience the sound scene as if his head was at the position of the multi-camera system 200.

In accordance with an embodiment, the multi-camera system 200 may be controlled by another device, wherein the multi-camera system 200 and the other device may communicate with each other and a user may use a user interface of the other device for entering commands, parameters, etc. and the user may be provided with information from the multi-camera system 200 via the user interface of the other device.

Referring back to Figure 1a, in addition or alternatively, sound sources 102, 103, e.g. instrument players or a vocalist, may be equipped with external microphones to enhance the spatial audio scene. The external microphones may be e.g. a headset microphone capturing a voice signal or an instrument microphone capturing the instrument signal, or some other microphone. The captured signals may be transmitted wirelessly or wiredly into a server, e.g. a spatial audio mixing server 150.

The sound sources 102, 103 may be equipped with a positioning tag 104, 105. The positioning tags 104, 105 may be integrated to the microphones the sound sources 102, 103 are carrying, respectively. The positioning tags may provide radio-based positioning signal to a server, e.g. a positioning data server 155, wherein the positions of the tags may be estimated based on the received radio signal measurements. The estimation of the position may be calculated e.g. based on time-difference of arrival (TDOA) or based on some other method.

The positioning data server 155 may provide the tag position estimates to the spatial audio mixing server 150. The spatial audio mixing server 150 may create a spatial audio signal using the captured sound signals from the sound sources 102, 103 and the position data from positioning tags 104, 105. The spatial audio signal may be, for example, a binaural signal generated by head related transfer function (HRTF) filtering of the source signals so that they appear to arrive from their correct positions around the virtual reality camera, or a 5.1 loudspeaker format signal obtained by vector base amplitude panning (VBAP) of the source signals to the correct spatial position in a 5.1 audio channel format. Furthermore, the spatialized source signals may be mixed (summed) to a spatial audio signal captured by the microphone array of the virtual reality camera.

Spatial audio capture technology may process audio signals captured via a microphone array into a spatial audio format. In other words, spatial audio capture technology may generate an audio signal format with a spatial perception capacity. Audio signals may be captured such that, when rendered to a user, the user can experience the sound field as if one was present at the location of the capture device.

In the examples described herein the audio signal is rendered into a suitable binaural form, where the spatial sensation may be created using rendering such as by head-related-transfer-function (HRTF) filtering a suitable audio signal.

An audio capture system may be configured to capture both a close (speaker, instrument or other source) audio signal and a spatial (audio field) audio signal. The system may furthermore be configured to determine a location of the source relative to the spatial capture components and further determine the audio signal delay required to synchronize the close audio signal to the spatial audio signal. This information may then be stored or passed to a suitable rendering system which having received the audio signals and the information (positional and delay time) may use this information to generate a suitable mixing and rendering of the audio signal to a user.

In some situation, there may be an object 110, e.g. a sound source who may not carry a position tag and/or an external microphone. The object 110 may be e.g. an instrument player or a vocalist. Because the object 110 may not carry a position tag, a location of the object 110 may not be tracked as described previously in the context of the sound sources 102 and 103. The microphone array of the virtual reality camera 101 may be used to capture the sound of the object 110 in case the sound produced by the object 110 is loud enough.

It may be beneficial to be able to track the location of the object 110. The estimated location of the object 110 may be used e.g. in forming a steering input for an audio beamformer which may be directed towards the location of the object 110 to better capture the sound produced by the object 110. Audio beamforming may be implemented utilizing e.g. the microphone array of the virtual reality camera 101. One benefit of the location tracking may be that the position data of the object 110 may be needed in distributed audio capture, spatial audio mixing and/or other applications.

An example of a system for positioning an object, e.g. a sound source, is shown in Figure 1a. The system may comprise a plurality of receiver/transmitter units 120, 121, 122. The receiver/transmitter units 120, 121, 122 may comprise a transmitter and a receiver able to receive and transmit e.g. radio frequency signals. The frequency may be such that the diffraction around the object may be prevented. The receiver/transmitter units may be implemented as radio-frequency identification (RFID) tags, using for example Bluetooth™ or other low power radio frequency (RF) technology. The system may comprise at least one central unit 130. The central unit 130 may be a separate device or it may be part of the virtual reality camera accessory 101. The plurality of receiver/transmitter units 120, 121, 122 may be operatively connected to the at least one central unit 130. The plurality of receiver/transmitter units 120, 121, 122 may at least partly surround an area around the at least one central unit 130. The plurality of receiver/transmitter units 120, 121, 122 may be placed around a predefined area, such as a music stage. The plurality of receiver/transmitter units 120, 121, 122 may be attached to a tape, e.g. a sticker tape 140 that may be attached to a construction such as walls surrounding an audio capture setup such as the music stage or on the floor of the audio capture setup. Alternatively, the plurality of receiver/transmitter units 120, 121, 122 may be attached to a rope or such flexible cord that may be stored in a reel. Marking the area and installing the receiver/transmitter units may be convenient using a sticker tape or a rope or equivalent.

Figure 1b shows a server device for providing e.g. spatial audio mixing and/or position estimation. As shown in Figure 1b, the server 150, 155, 160 may contain memory MEM 170, one or more processors PROC 172, 173, and computer program code PROGRAM 174 residing in the memory MEM 170 for implementing, for example, spatial audio mixing. The server may also comprise communication modules COMM1 176, COMM2 177 or communication functionalities implemented in one module for communicating with other devices. The different servers 150, 155, 160 may contain these elements, or fewer or more elements for employing functionality relevant to each server. The servers may comprise a database residing in a memory of the server. Any or all of the servers 150, 155, 160 may individually, in groups or all together process and store audio signals and/or position data. The servers may form a server system, e.g. a cloud.

According to an embodiment, a method for positioning an object 110 may comprise providing a central unit 130 and a plurality of receiver/transmitter units 120, 121, 122 at least partly surrounding an area around the central unit 130, transmitting at least one evoking signal 132, 133, 134, 135, 136, 137 from the central unit 130 towards at least one of the plurality of receiver/transmitter units, detecting an absence of a signal from at least one of the plurality of receiver/transmitter units and determining position of at least one object 110 between the central unit 130 and at least one of the plurality of receiver/transmitter 120, 121, 122 units based on the detected absence of the signal. The positioning method may enable tracking objects, e.g. sound sources, which do not carry any positioning tags and/or which arrive inside an area where audio capture is carried out, e.g. on a music stage.

Figure 3 shows a flowchart of an example of a positioning method. The method may comprise detecting 310, by a central unit, signals from a plurality of receiver/transmitter units at least partly surrounding an area around the central unit; detecting 320, by the central unit, an absence of at least one signal from at least one of the plurality of receiver/transmitter units at least partly surrounding an area around the central unit; and determining 330 a position of at least one object between the central unit and at least one of the plurality of receiver/transmitter units based on the detected absence of the at least one signal.

It is proposed a method and a system for enabling tracking of persons or other interesting objects of interest inside a closed area. An example scenario is tracking the sound sources in an area such as the stage, where automatic distributed audio capture is performed. The area of interest may be surrounded with a sticker tape or rope or band or belt containing radio receiver/transmitter units. A central unit (such as a virtual camera accessory) may send a radio signal from the central area of interest towards the receiver/transmitter units. When the receiver/transmitter units receive the signal, they may communicate it back to the central unit. If there is nothing in between the central unit and the radio receiver/transmitter units, the signal may travel successfully from the central unit to the receiver/transmitter units and back. If there is an obstacle blocking the signal path, such as a person, the central unit may not receive the transmission, i.e. may detect an absence of the signal, and may infer that something may be blocking the path from the central unit to the receiver/transmitter units. Based on this information, the central unit may detect and track objects in the surroundings, and may use this information for audio mixing and capture.

As noted above, the embodiments are not limited to positioning objects, such as sound sources, in a spatial audio environment, but the embodiments may be applied to positioning any objects residing in an area comprising a central unit and a plurality of receiver/transmitter units at least partly surrounding the area around the central unit. Another example of positioning objects according to the embodiments is positioning hockey players in a rink. The central unit may be e.g. attached to a goal and the sticker tape may be attached to the edges of the rink. Position data of the players may be used for example in video game planning. Other examples may comprise positioning and calculating the amount of children in a kindergarten, wherein the sticker tape may be attached to the surrounding fences, or monitoring a closed yard around a house.

The central unit 130 may send evoking signals 132, 133, 134, 135, 136, 137, e.g. radio signals, infrared, laser light, or other optical signals, to all directions. The radio receiver/transmitter units may receive the signal sent by the central unit 130, and transmit the signal back when received. The signal 132, 133, 134, 135, 136, 137 sent back from the receiver/transmitter units, in response to the at least one evoking signals, may be called an acknowledgement signal. Examples of the signals propagating between the central unit 130 and receiver/transmitter units is depicted with arrows 132, 133, 134 in Figure 1a.

Sometimes there may be an obstacle between the central unit and the receiver/transmitter units preventing the signal propagating between the central unit and the receiver/transmitter units. Then, in occasions when there is an obstacle between the central unit and the receiver/transmitter units, one or more of the receiver/transmitter units may not receive the signal. For example, there may be an object 110 between the central unit 130 and the receiver/transmitter units. The object 110 may prevent the signals 135, 136, 137 propagating from the central unit 130 to the receiver/transmitter units thus creating a shadow marked with the dashed ellipse 115 behind the object 110. In other words, the receiver/transmitter units in the shadow 115 may not receive the signals 135, 136, 137 sent by the central unit 130. Similarly, shadows 116, 117 may be created behind the sound sources 102 and 103. The position of at least one object between the central unit and at least one of the plurality of receiver/transmitter units may be determined based on information on which of the receiver/transmitter units are in the shadow. In other words, the position of at least one object between the central unit and at least one of the plurality of receiver/transmitter units may be determined based on the detected absence of the at least one signal.

According to an embodiment, detecting the absence of the signal may comprise detecting that the at least one evoking signal is not received by at least one of the receiver/transmitter units 120, 121, 122 or detecting that the acknowledgement signal is not received from at least one of the plurality of receiver/transmitter units, i.e. the acknowledgement signal is not transmitted back to the central unit 130 from at least one of the plurality of receiver/transmitter 120, 121, 122 at a predetermined time. If the receiver/transmitter units 120, 121, 122 cannot receive the signal from the central unit 130, the receiver/transmitter unit may not transmit any signal back to the central unit. This will give an indication of whether there is an obstacle, e.g. a person in that direction. The direction may be determined based on information on which of the receiver/transmitter units are in the shadow. Communication from the receiver/transmitter units to the central unit may be carried wirelessly or by built in communication strip in the receiver/transmitter units. The central unit may maintain state information which receiver/transmitter units received the signal. The central unit may be in communication connection, e.g. wirelessly, with the server(s) 150, 155, 160. The state information may be provided to a server, e.g. to the sticker tape server 160, from the central unit 130. In addition or alternatively, the receiver/transmitter units may communicate e.g. wirelessly with a server, e.g. the sticker tape server.

According to an embodiment, the method for positioning an object may comprise determining a region, covered by at least one of the plurality of receiver/transmitter units that has not transmitted the acknowledgement signal back to the central unit, and determining a position of the at least one object based on the determined region. The determined region may be e.g. the shadows 115, 116, 117 behind the objects 110, 102, 103.

According to an embodiment the determining the region covered by at least one of the plurality of receiver/transmitter units may comprise determining a number of the receiver/transmitter units that has not transmitted the acknowledgement signal back to the central unit. The location of the central unit and the locations of the receiver/transmitter units may be inputted to the central unit, so the distance between each receiver/transmitter unit and the central unit may be estimated, and the direction of the receiver/transmitter units in relation to the central unit may be estimated.

According to an embodiment, the units 120, 121, 122 may be transmitting-only, e.g. read-only type units, for example RFID tags. The RFID tags surrounding the central unit may be active units having a local power source, e.g. a battery. The units may transmit signals 131, 138, e.g. periodically, to the central unit 130. An obstacle,. e.g. the object 110, between the central unit 130 and the transmitting units may prevent the signal 138 propagating between the transmitter units and the central unit. Then, the central unit may not receive the signal 138 sent from the transmitter units because of the obstacle. Thus, the transmitter units in the shadow are the units from which the central unit is not able to receive the signal in a predetermined time. The signal may be transmitted by the active RFID tags without first receiving any signal from the central unit. According to an embodiment, determining the region covered by at least one of the plurality of receiver/transmitter units may comprise determining a number of the receiver/transmitter units from which the central unit is not able to receive the signal.

Estimation of the distance between the object and the central unit may be carried out based at least partly on the size of the shadow behind the object. The distance estimations may be carried out using e.g. proportion of corresponding measures, or e.g. geometric and/or trigonometric calculations. For example, by knowing the distance between the plurality of receiver/transmitter units it may be possible to determine the size of the shadow. If the distance between the plurality of receiver/transmitter units is 10 cm, and the number of the receiver/transmitter units that has not transmitted the acknowledgement signal back to the central unit is 5, the size of the shadow may be estimated to be approximately 40 to 60 cm. For example, as illustrated in Figure 1c showing a diagram of distances and measures of an example setup, if the distance 'c' between the central unit 180 and the receiver/transmitter units 185 and the size 'b' of the object 190 are known in addition to the size 'a' of the shadow, the distance 'd' between the object 190 and the central unit 180 may be determined based on e.g. proportion of corresponding measures. If the distance 'c' between the central unit 180 and the receiver/transmitter units 185 and the distance 'd' between the object 190 and the central unit 180 are known in addition to the size 'a' of the shadow, it may be possible to determine the size 'b' of the object 190 based on e.g. proportion of corresponding measures. As shown in Figure 1c, the proportion of corresponding measures may be written as a/c=b/d or a/b=c/d, wherein 'a' denotes size of the shadow, 'b' denotes size of the object 190, 'c' denotes the distance between the central unit 180 and the receiver/transmitter units 185 and 'd' denotes the distance between the central unit 180 and the object 190.

According to an embodiment, the determining the position of the at least one object based on the determined region may comprise determining one or more of the group of a horizontal and/or vertical distance of the at least one object from the central unit and a direction of the at least one object from the central unit. The direction may be indicated e.g. by using degrees such that, for example in Figure 1a, the direction of the object 103 from the central unit may be approximately 60 to 85 degrees, and the direction of the object 110 from the central unit may be approximately - 60 to - 85 degrees or approximately 275 to 300 degrees.

According to an embodiment, the method for positioning an object may comprise receiving at least one audio signal from the at least one object and providing the at least one audio signal and the determined position of the at least one object corresponding to the at least one audio signal to a processing unit for spatial audio mixing, e.g. the spatial audio mixing server 150. The audio signal may be captured e.g. using a microphone array of the virtual reality camera 101 or using the external microphones such as a headset microphone or an instrument microphone capturing the instrument signal. The captured audio signal may be transmitted wirelessly or wiredly into a server, e.g. the spatial audio mixing server 150.

According to an embodiment, the method for positioning an object may comprise forming a steering input for a microphone array based on the position of the at least one object. This way the sound produced by the object may be better captured which may be an advantage in audio beamforming.

Indication on which of the receiver/transmitter units are in the shadow 115 may be transmitted to a server, e.g. a sticker tape server 160. The sticker tape server 160 may estimate where the shadows are in a capture region, e.g. on the music stage, by locating masked receiver/transmitter units which do not receive the signal from the central unit and/or which do not transmit any signal back to the central unit at a given point in time. In addition or alternatively, those units may be located from which the central unit is not able to receive the signal in case wherein the units are active RFID tags transmitting signals to the central unit without first receiving any signal from the central unit. The system may detect the adjacent masked units and infer that a group of adjacent masked units may be shadowed by the same object. Based on the estimates on the location of the shadows, the sticker tape server may further determine where there are objects around the central unit 130. The estimated positions of the objects may be provided from the sticker tape server 160 to the spatial audio mixing server 150. Alternatively, the estimated positions of the objects may be provided from the sticker tape server 160 to the positioning data server 155 which may further provide the position data to the spatial audio mixing server 150.

The spatial audio mixing server 150 may combine the position information from the sticker tape server 160 and the positioning data server 155. In other words, the spatial audio mixing server 150 may combine the position data estimated using the positioning tags 104, 105 and the position data estimated using the receiver/transmitter units 120, 121, 122. According to an embodiment, the receiver/transmitter units 120, 121, 122 may be arranged, e.g. attached, to a sticker tape 140. The receiver/transmitter units 120, 121, 122 may be evenly spaced in the sticker tape. When the receiver/transmitter units are evenly distributed, the accuracy of the distance determination may be improved.

In Figure 1a, the positioning data server 155 may determine that the regions 116, 117 of blocked transmitters/receivers behind the objects, e.g. sound sources 102 and 103, may be caused by the objects 102 and 103, since their position may be estimated using the positioning tags 104, 105. Thus, the shadows 116, 117 may be ignored. However, the region 115 behind the object 110 may be interesting since no position tag is located in that direction. The location of the interesting source may be communicated to the spatial audio mixing server 150. The distributed audio capture system may be adapted to react accordingly to an object 110. An example behavior is to steer an audio beamformer towards the location of the additional object 110 to better capture its sound. Audio beamforming may be implemented utilizing the microphone array of the virtual reality camera 101.

Position data provided by the positioning tags may be substituted by the position data from the sticker tape server 160. For example, in case a positioning tag 104, 105 runs out of power and stops transmitting data, or may otherwise be in a shadow by something and thus unable to transmit data, the position of the objects 102, 103 may be estimated using the position data from the sticker tape server 160.

Since the sticker tape 140 comprising the receiver/transmitter units 120, 121, 122 may define an area of interest, e.g. a music stage, objects, e.g. persons, who are outside of the area of interest and thus not shadowing any receiver/transmitter units, may be ignored. The sticker tape 140 may define an area within which relative positioning of objects may be carried out using the method for positioning presented in this application i.e. the sticker tape object positioning method.

In case the objects carrying a positioning tag go outside the area of interest defined by the sticker tape 140, their microphones may be automatically muted to prevent unwanted signals to be captured.

The sticker tape object positioning information may be used in combination of other positioning mechanisms. For example, it may be used together with audio-based source positioning. The spatial audio mixing system may perform audio source positioning by analyzing the sound captured by the microphone array of the VR camera. Such localization may be based, for example, on time-difference of arrival methods. When using audio-based source positioning the object to be positioned has to produce sound constantly. When the source is silent audio-based source positioning cannot be used. It may be possible to use a combination of audio-based source localization and the sticker tape object positioning. Thus, the sticker tape object positioning may complement the audio-based source positioning, e.g. when the source is silent. The combining of the two localization methods may be done, for example, by detecting common objects localized by the audio-based source positioning and the sticker tape object positioning, i.e. detecting an object detected by the sticker tape positioning system in the same direction where there is an active audio source, by initiating tracking for the source, and combining the source location information over time.

The sticker tape object positioning method may aid in deciding which of the detected audio sources are actual audio sources which should be tracked and/or which should be added as their own tracks in the spatial audio mixing system. For example, there might be loud noises or other sound sources which may be captured and localized by the microphone array of the virtual reality camera. However, analysis on whether there are objects detected by the sticker tape object positioning system in the direction of each source may be used to determine whether the source is a true sound source or whether the source is some external noise source. In other words, in order for a sound source to be automatically tracked and added as its own track in the spatial audio mixing system the system might require that there is an object detected by the sticker tape object positioning system in that direction. Otherwise the source might not be added into the spatial audio mixing system.

By varying the transmitted signal characteristics it may be possible to measure the reflections of the signal. This way it may be possible to obtain information on the object characteristics. For example, it may be determined whether the object is a hard or a soft object, what is its shape and so on. This may be useful for the spatial audio mixing. For example, hard objects may not be interesting for spatial audio capture.

Although the servers, the central unit and audio capture devices are shown separately, it is understood that they may be implemented with the same apparatus or may be distributed over a series of physically separate apparatuses which are connected using a communication connection. For example, there may be one local area network (LAN) for audio data and another for position data, or one LAN carrying both, audio data and position data. Each LAN may have a switch acting as a hub to which the servers, position tags, sticker tape, audio equipment etc. may be connected.

A skilled person appreciates that any of the embodiments described above may be implemented as a combination with one or more of the other embodiments, unless there is explicitly or implicitly stated that certain embodiments are only alternatives to each other.

The various embodiments can be implemented with the help of computer program code that resides in a memory and causes the relevant apparatuses to carry out the invention. Thus, the implementation may include a computer readable storage medium stored with code thereon for use by an apparatus, which when executed by a processor, causes the apparatus to perform the various embodiments or a subset of them. Additionally or alternatively, the implementation may include a computer program embodied on a non-transitory computer readable medium, the computer program comprising instructions causing, when executed on at least one processor, at least one apparatus to apparatus to perform the various embodiments or a subset of them. For example, an apparatus may comprise circuitry and electronics for handling, receiving and transmitting data, computer program code in a memory, and a processor that, when running the computer program code, causes the terminal device to carry out the features of an embodiment.

The above-presented embodiments are not limiting, but it can be modified within the scope of the appended claims.

## Claims

1. A method, comprising
detecting, by a central unit, signals from a plurality of receiver/transmitter units at least partly surrounding an area around the central unit;
detecting, by the central unit, an absence of at least one signal from at least one of the plurality of receiver/transmitter units at least partly surrounding an area around the central unit; and
determining a position of at least one object between the central unit and the at least one of the plurality of receiver/transmitter units based on the detected absence of the at least one signal.

2. The method according to claim 1, further comprising prior to detecting:
transmitting, by the central unit, at least one evoking signal towards at least one of the plurality of receiver/transmitter units.

3. The method according to claim 2, further comprising
detecting, by the central unit, that an acknowledgement signal is not received from at least one of the plurality of receiver/transmitter at a predetermined time in response to transmitting of the at least one evoking signal.

4. The method according to any of the claims 1 to 3, further comprising
determining, by the central unit, a region based by at least one of the plurality of receiver/transmitter units from which the central unit has not received the at least one signal; and
determining a position of the at least one object based on the determined region.

5. The method according to claim 4, wherein the determining the region based by at least one of the plurality of receiver/transmitter units comprises determining a number of the receiver/transmitter units from which the central unit has not received the at least one signal.

6. The method according to claims 4 or 5, wherein the determining the position of the at least one object based on the determined region comprises determining one or more of the group of
- a horizontal distance of the at least one object from the central unit; and
- a direction of the at least one object from the central unit.

7. The method according to any preceding claim, further comprising
receiving at least one audio signal from the at least one object; and
providing the at least one audio signal and the determined position of the at least one object corresponding to the at least one audio signal to a processing unit for spatial audio mixing.

8. A method, comprising
transmitting, by at least one of the plurality of receiver/transmitter units at least partly surrounding an area around a central unit, at least one signal to the central unit for determining position of at least one object between the central unit and at least one of the plurality of receiver/transmitter units.

9. The method according to claim 8, further comprising prior to transmitting
receiving, by at least one of the plurality of receiver/transmitter units at least partly surrounding an area around the central unit, at least one evoking signal from the central unit; and wherein the at least one signal is an acknowledgement signal in response to transmitting of the at least one evoking signal.

10. The method according to any preceding claim, wherein the plurality of receiver/transmitter units are arranged in a sticker tape.

11. An apparatus comprising at least one processor, memory including computer program code, the memory and the computer program code configured to, with the at least one processor, cause the apparatus to perform the method according to any of the claims 1 to 7.

12. An apparatus comprising at least one processor, memory including computer program code, the memory and the computer program code configured to, with the at least one processor, cause the apparatus to perform the method according to any of the claims 8 to 10.

13. A computer program product embodied on a non-transitory computer readable medium, comprising computer program code configured to, when executed on at least one processor, cause an apparatus to perform the method according to any of the claims 1 to 7.

14. A computer program product embodied on a non-transitory computer readable medium, comprising computer program code configured to, when executed on at least one processor, cause an apparatus to perform the method according to any of the claims 8 to 10.

15. A system, comprising
a plurality of receiver/transmitter units;
at least one central unit;
the plurality of receiver/transmitter units being operatively connected to at least one central unit; and
the plurality of receiver/transmitter units at least partly surrounding an area around the at least one central unit, the system being arranged to perform the method according to any of the claims 1 to 10.
